# EUROPEAN PATENT SPECIFICATION

(11) **EP 0 317 485 B1**
(45) Date of publication and mention of the grant of the patent: **06.10.1993**
(21) Application number: 88500110.7
(22) Date of filing: 14.11.1988
(51) Int. Cl.: F02M 31/16

(54) **Gasifying, economizing, decontaminating and power enhancing apparatus for improving the operation of engines, appliances, burners and equipment which use solid, liquid or gaseous fuels**
Vorrichtung zum Vergasen, Einsparen von Kraftstoff, Reinigen und Erhöhen der Leistung für Motoren, Geräte, Brenner und Ausrüstungen, die feste, flüssige oder gasförmige Brennstoffe benutzen
Dispositif pour gazéifier, économiser du carburant, rendre moins nocif et augmenter la puissance de moteurs, d'appareils, de brûleurs et d'équipement utilisant des carburants solides, liquides ou gazeux

(30) Priority: 13.11.1987 ES 8703536
(43) Date of publication of application: 24.05.1989
(73) Proprietor: TURBEX 2000, S.A., E-28047 Madrid (ES)
(72) Inventor: Humanes Jurado, Gaspar, E-28047 Madrid (ES)
(74) Representative: Elzaburu Marquez, Alberto

(56) References cited:
- DE-A- 2 403 901
- DE-A- 3 135 584
- DE-A- 3 203 764
- DE-A- 3 518 312
- ES-U- 289 401
- FR-A- 2 404 811
- FR-A- 2 541 376

## Description

The present invention refers to several substantial improvements introduced into the subject of Spanish Utility Model No. 289401, presented on 4 October 1985 in the name of the present applicant.

The present invention refers to a gasifying, economizing, decontaminating and power enhancing apparatus for improving the operation of amongst others internal combustion engines, appliances, burners and equipment which use solid, liquid or gaseous fuels, both with regard to the efficiency of the said appliances as well as with respect to the cleanness or non contaminated state of the exhaust gases resulting from the said operation.

Such an apparatus is made up of one or more coils or spiral fuel tubes which are embedded in a casing and encircle a conduit through which the hot liquid or gas for cooling the engine or equipment circulates, the fuel which is going towards the engine or equipment passing through the said coils for its heating and vaporization, undergoing a release and a neutralisation of negative ions, said coolant conduit coming from the cooling circuit of an internal combustion engine or other heat generating equipment and being encircled by an external protective metal covering, made of aluminium, which widens defining said casing encircling said coolant conduit in close contact with the same so that between both there is a good heat transmission relationship and in which said spiral fuel tube is helicoidally inserted, whereby the fuel is preheated before reaching the combustion point, a release and a neutralization of negative ions likewise being created due to the difference of materials making up the apparatus.

An apparatus with the features set forth in the preamble of Claim 1 is known from DE-A-31 35 584. This apparatus is inserted into the coolant conduit coming from the internal combustion engine and the ends of its coil are connected to the fuel pipe of the engine in such a way that all the fuel having to be burnt in the engine passes through the coil. Hence, with this apparatus one cannot control the amount of fuel passing through the coil and heated therein, nor can the temperature be regulated at which the fuel reaches the engine cylinders. Such temperature regulation may be necessary to take into account, for example, the external climatic conditions. Furthermore, no compensation element is provided for in said apparatus, to avoid the fuel pump becoming empty. Thus, it is evident that said earlier apparatus is not in a condition to assure uniform operation of the fuel pump and to guarantee that the fuel will always reach the engine at a suitable operating temperature not exceeding a predetermined optimal value.

The present invention has overcome these deficiencies providing an apparatus which, in accordance with the characterizing part of Claim 1, is constructed in such a way that the casing is internally jacketed with an internal metal tube made of copper and forming the coolant conduit within the apparatus; a diversion pipe with thermostat is situated at the junction of the exit end of the fuel coil with said diversion pipe, to detect the temperature of the fuel which is flowing along the said coil for the purpose of regulating, by opening or closing the diversion pipe, the temperature of the fuel which reaches the engine, preventing it from exceeding a predetermined excessive temperature, said diversion pipe with thermostat being located between the entry and the exit ends of the spiral fuel tube; a heater with thermostat is provided in the fuel entry pipe of the apparatus before the point where said diversion pipe starts; a compensation element in the form of a trap, preventing the fuel pump from remaining empty, is positioned at the exit of the diversion pipe, the fuel being completely vaporized at the exit end of the fuel spiral tube.

Further, in accordance with another aspect of the invention as set forth in claim 2, the heater of the present apparatus consists of a length of pipe for the passage of the fuel, having a heating element for preheating and vaporizing the fuel during initial operation of the engine or like apparatus, as well as a check valve to prevent the fuel from returning, the thermostat of the heater disconnecting the heating element when the fuel reaches an appropriate temperature.

The aforementioned apparatus acts in the first place as a gasifier, by making the liquid fuel fed to the engine arrive in a completely vaporized state at the cylinders where combustion takes place, and, in second place, it also acts as a fuel economizer, since, on the one hand, this undergoes prior heating, entering the combustion cylinders at a high temperature, by which the thermic efficiency of combustion is improved and, on the other hand, it brings about a more effective mixing of the air and fuel, which results in a practically complete combustion, as a consequence of which uncontaminated emission of exhaust gases is produced, and at the same time the power of the internal combustion engine is increased and considerably enhanced.

With this, the present problems of contamination caused by incomplete combustion, carburation or burning of the mixtures of air and fuel at any speed of the engine or equipment and no matter what fuels are used, whether they are solid, liquid or gaseous, are solved.

An illustrative version, which is in no way limitative, of the subject of the invention, will be described below with reference to the attached drawings, in which:
Figure 1 is a general diagramatic view, in cross-section, of the whole apparatus of the invention;
Figure 1a is a diagramatic view of the apparatus of the invention, without the diversion or the thermostat;

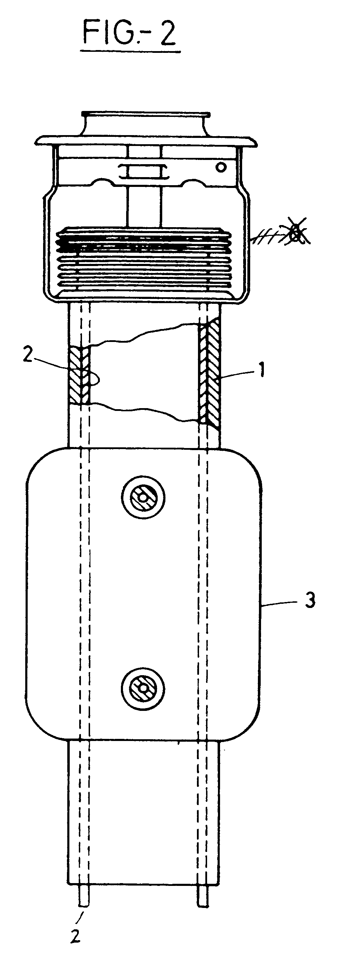

Figure 2 is an external view, partially sectionalised, of the whole pipe for carrying the cooling water, with a thermostat positioned on it;
Figure 3 shows a longitudinal cross-section of a heating device, which operates with the apparatus of the invention as an independent mechanism for some fuels and to assist the initial operation of the engine when it is cold;
Figures 4a, 4b and 4c show views of an apparatus of the invention and its external frame, usable, as an alternative version, operationally equivalent; and
Figure 5 shows a longitudinal cross-section of a compensating element for the fuel pump.

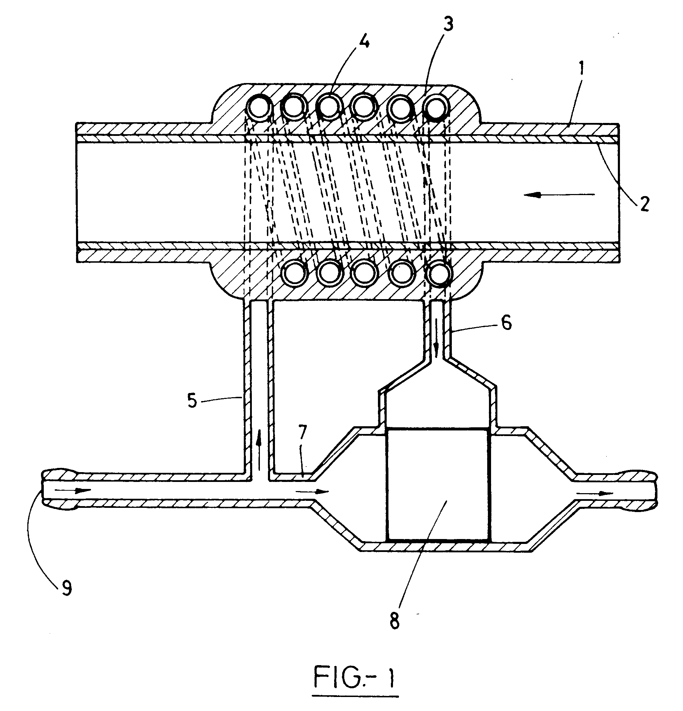

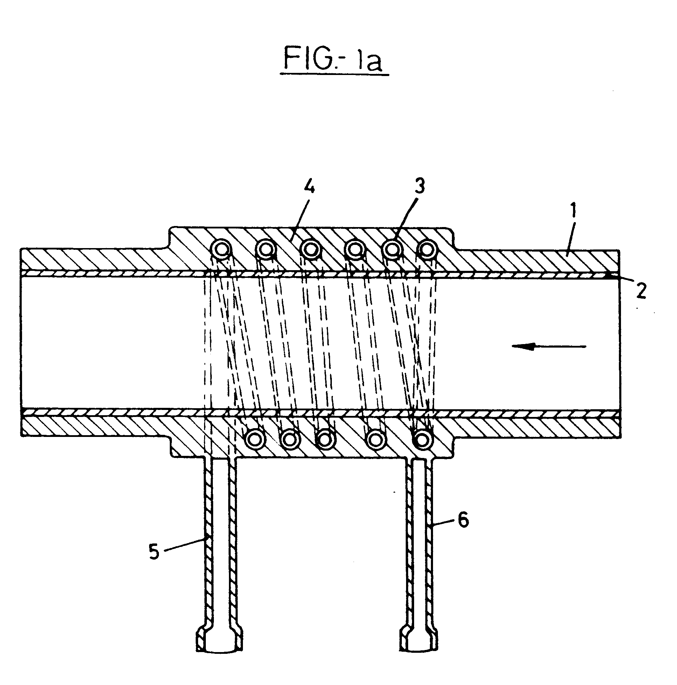

Referring now to the drawings, in figure 1 is shown a general layout of the apparatus, which consists essentially of an external protective covering 1, made of aluminium, equipped with another internal tube 2, made of copper, through which the water, air, oil or other coolant from the cooling system of an internal combustion engine or other equipment circulates, the said tubes corresponding to the section of piping positioned at the outlet of the engine (not shown) and which takes the liquid to the radiator to be cooled, as a result of which the liquid of the said pipe will be at a considerably high temperature. That is liquid or gas.

Around the aforementioned cooling liquid or gas tube 2 is positioned an external frame or casing 3 which encircles the said coolant tube in close contact with it so that there is a good heat transfer between these two, the external protective covering 1 being possibly an expanded part 3 of the apparatus of the invention. A fuel carrying tube 4 is inserted in the said expanded part 3 wound in a spiral around the tube 2 of coolant liquid, by which means the fuel impelled towards the engine through the said spiral tube or coil will undergo prior heating and, as a consequence, complete vaporization before reaching the combustion cylinders, as well a release and a neutralization of negative ions will be created by the difference between materials due to the difference which exists between the atoms of the materials which make up the apparatus of the invention. This is activated by making a current of hot water pass in such a way that it passes at right angles to the flow of the fuel.

Between the entry 5 and exit 6 ends of the fuel from the spiral tube or coil, there is (figure 1) a diversion pipe 7 which includes a thermostat 8 by means of which the amount of fuel which is circulating through the spiral tube 4 can be regulated according to its temperature, that is, the thermostat 8 opens the diversion pipe 7 after a determined excessive temperature, the temperature of the fuel which arrives at the combustion cylinders for example, being regulated in this way, within a fixed margin.

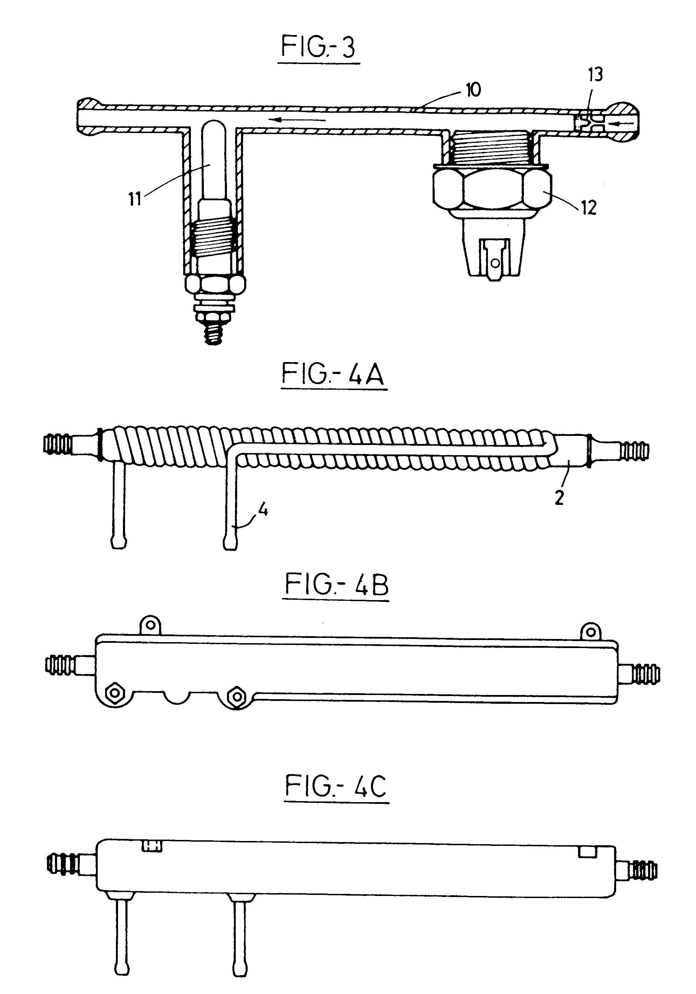

In the fuel entry pipe 9, before the point of diversion, a section of pipe or tube 10 is made available for the fuel to pass along (Figure 3), equipped with a heating element 11 and a thermostat 12, usable in the initial operating periods of the engine, that is when the cooling liquid is cold, in order to achieve the effect of initial heating and vaporization of the fuel which reaches the engine, the thermostat switching off the said heating element when the appropriate temperature has been reached. A return check valve 13 is positioned at the exit end of the said heating tube 10 which prevents the fuel from returning.

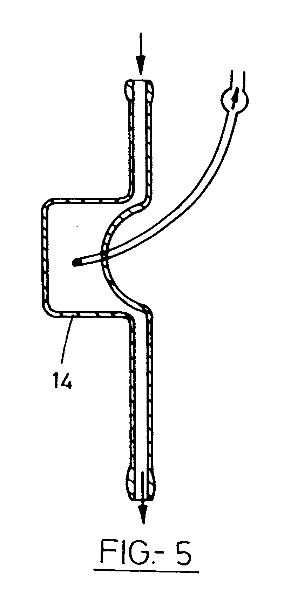

At the exit from the diversion pipe 7 there is a compensation element 14 in the form of a trap, shown in figure 5, which prevents the fuel pump from remaining empty.

The circulation of the fuel through the coil or spiral tube 4 must take place in countercurrent with relation to the circulation of the engine cooling liquid, as is shown in figure 1, or it may have the same direction of circulation, the location of the apparatus in relation to the engine being likewise optional, whatever is the most convenient in each case.

The coil or spiral tube apparatus shown in figures 4a, 4b and 4c operates in the same way as the one described above, the only difference being in the different length of the spiral tube, the length of which corresponds to the power of the engine to which it is applied, the aforementioned alternative version being envisaged for lorry and bus engines or similar, or any other equipment or device.

## Claims

1. A gasifying, economizing, decontaminating and power enhancing apparatus for improving the operation of among others internal combustion engines, appliances, burners and equipment which use solid, liquid or gaseous fuels, which acts as a gasifier and economizer of solid, liquid or gaseous fuels as well as a decontaminator of exhaust gases, which is made up of one or more coils or spiral fuel tubes (4) which are embedded in a casing (3) and encircle a conduit through which the hot liquid or gas for cooling the engine or equipment circulates, the fuel which is going towards the engine or equipment passing through the said coils (4) for its heating and vaporization, undergoing a release and a neutralisation of negative ions, said coolant conduit coming from the cooling circuit of an internal combustion engine or other heat generating equipment and being encircled by an external protective metal covering (1), made of aluminium, which widens defining said casing (3) encircling said coolant conduit in close contact with the same so that between both there is a good heat transmission relationship and in which said spiral fuel tube (4) is helicoidally inserted, whereby the fuel is preheated before reaching the combustion point, a release and a neutralization of negative ions likewise being created due to the difference of materials making up the apparatus, characterized in that said casing is internally jacketed with an internal metal tube (2) made of copper and forming the coolant conduit within the apparatus and in that a diversion pipe (7) with thermostat (8) is situated at the junction of the exit end of said coil with said diversion pipe, to detect the temperature of the fuel which is flowing along the said coil for the purpose of regulating, by opening or closing the diversion pipe, the temperature of the fuel which reaches the engine, preventing it from exceeding a predetermined excessive temperature, said diversion pipe (7) with thermostat being located between the entry and the exit ends of the spiral fuel tube (4); a heater with thermostat (12) is provided in the fuel entry pipe (9) of the apparatus before the point where said diversion pipe (7) starts; a compensation element (14) in the form of a trap, preventing the fuel pump from remaining empty, is positioned at the exit of the diversion pipe (7), the fuel being completely vaporized at the exit end (6) of the fuel spiral tube (4).

2. Apparatus as in Claim 1, characterized in that said heater consists of a length of pipe (10) for the passage of fuel, having a heating element (11) for preheating and vaporizing the fuel during initial operation of the engine or like apparatus, as well as a check valve (13) to prevent the fuel from returning, said thermostat (12) disconnecting the heating element (11) when the fuel reaches an appropriate temperature.

## Patentansprüche

1. Vorrichtung zum Vergasen, Einsparen von Kraftstoff, Reinigen und Erhöhen der Leistung zur Verbesserung der Arbeitsweise von u.a. Brannkraftmaschinen, Geräte, Brenner und Ausrüstungen, die feste, flüssige oder gasförmige Kraftstoffe benutzen, welche sowohl als Vergaser und Einsparer von festen, flüssigen oder gasförmigen Kraftstoffen sowie als Reiniger von Abgasen wirkt, und welche aus einem oder mehreren Rohrschlangen oder spiralförmigen Kraftstoffrohren (4) besteht, die in ein Gehäuse (3) eingebettet sind und eine Rohrleitung umgeben, durch welche die heisse Flüssigkeit oder das heisse Gas zur Kühlung der Maschine oder Ausrüstung hindurchströmt, wobei der Kraftstoff, der in Richtung der Maschine oder Ausrüstung gefördert wird, durch die genannten Rohrschlangen (4) fliesst, um erwärmt und verdampft zu werden, unter Freisetzung und Neutralisierung von negativen Ionen, wobei die genannte Kühlmittelrohrleitung aus dem Kühlkreislauf einer Brennkraftmaschine oder einer sonstigen Wärmeerzeugungsausrüstung kommt und von einer äusseren, aus Aluminium bestehenden Schutzmetallabdeckung (1) umgegeben ist, welche sich unter Bildung des genannten Gehäuses (3), das die genannte Kühlmittelrohrleitung umgibt, und unter innigem Kontakt mit derselben erweitert, so dass es zwischen beiden Gliedern ein gutes Wärmeübertragungsverhältniss gibt, und in welche das genannte spiralförmige Kraftstoffrohr (4) wendelweise eingesetzt ist, wobei der Kraftstoff vorgewärmt ist, bevor er den Verbrennungspunkt erreicht, und ebenfalls eine Freisetzung und Neutralisierung von negativen Ionen wegen der verschiedenen Materialien, aus welchen die Vorrichtung besteht, geschaffen wird, dadurch gekennzeichnet, dass das genannte Gehäuse mit einem inneren Metallrohr (2), das aus Kupfer besteht und die Kühlmittelrohrleitung innerhalb der Vorrichtung bildet, innerlich verkleidet ist und dass eine Abzweigleitung (7) mit einem Thermostaten (8) an der Verbindung des Ausgangsendes der genannten Rohrschlange mit der genannten Abzweigleitung liegt, um die Temperatur des Kraftstoffes, der entlang der genannten Rohrschlange strömt, zwecks Regelung der Temperatur des die Maschine erreichenden Kraftstoffes unter Öffnen oder Schliessen der Abzweigleitung, zu erfassen, wobei verhindert wird, dass man eine vorherbestimmte übermässige Temperatur übersteigt, wobei die genannte Abzweigleitung (7) mit einem Thermostaten zwischen dem Eingangs- und Ausgangsende des spiralförmigen Kraftstoffrohres (4) liegt; ein Erwärmer mit einem Thermostaten (12) in der Kraftstoffeingangsleitung (9) der Vorrichtung vor dem Punkt, wo die genannte Abzweigleitung (7) beginnt, vorgesehen ist; ein Ausgleichelement (14) in der Form eines Saughebers am Ausgangsende der Abzweigleitung (7) liegt, um zu verhindern, dass die Kraftstoffpumpe leer bleibt, wobei der Kraftstoff am Ausgangsende (6) des spiralförmigen Kraftstoffrohres (4) vollständig verdampft ist.

2. Vorrichtung nach Anspruch 1, dadurch gekennzeichnet, dass der gennante Erwärmer aus einer Rohrleitungslänge (10) für Kraftstoffströmung besteht, die ein Heizelement (11) zum Vorwärmen und Verdampfen des Kraftstoffes bei Anfangsbetrieb der Maschine oder einer ähnlichen Vorrichtung sowie ein Rückschlagventil (13) zum Verhindern des Kraftstoffrücklaufes aufweist, wobei der genannte Thermostat (12) das Heizelement (11) dann ausschaltet, wenn der Kraftstoff eine angemessene Temperatur erreicht.

## Revendications

1. Dispositif pour gazéifier, économiser du carburant, rendre moins nocif et augmenter la puissance afin d'améliorer le fonctionnement de, entre autres, moteurs à combustion interne, appareils, brûleurs et équipement utilisant des carburants solides, liquides ou gazeux, qui en tant que gazéificateur et économiseur de carburants solides, liquides ou gazeux, ainsi que décontaminateur des gaz d'échappement, et qui est composé d'un ou de plusieurs serpentins ou tubes spirales à carburant (4) qui sont encastrés dans un couvercle (3) et qui entourent un conduit dans lequel circule le liquide ou gaz chaud pour le refroidissement du moteur ou de l'équipement, le carburant qui va vers le moteur ou l'équipement traversant lesdits serpentins (4) pour y être chauffé et vaporisé, subissant une libération et neutralisation des ions négatifs, ledit conduit à réfrigérant venant du circuit de refroidissement d'un moteur à combustion interne ou un autre équipement générateur de chaleur et étant entouré par une enveloppe métallique de protection extérieure (1), fabriquée en aluminium, qui s'évase en définissant ledit couvercle (3) entourant ledit conduit à réfrigérant en contact étroit avec celui-ci, de sorte qu'il y a un bon rapport de transmission de la chaleur parmi les deux, et dans lequel est inséré hélicoïdalement ledit tube spiral à carburant (4), ce après quoi le carburant est préchauffé avant d'atteindre le point de combustion, une libération et neutralisation des ions négatifs étant aussi créée à la suite de la différence des matériaux constituant le dispositif, caracterisé en ce que ledit couvercle est révêtu intérieurement avec un tube métallique intérieur (2), fabriqué en cuivre et constituant le conduit à réfrigérant dans le dispositif et en ce qu'un tube de dérivation (7) muni d'un thermostat (8) est placé au point de jonction de l'extrémité de sortie dudit serpentin avec ledit tube de dérivation, pour détecter la température du carburant passant le long dudit serpentin, dans le but de régler, en ouvrant ou fermant le tube de dérivation, la température du carburant qui arrive au moteur, en l'empêchant de dépasser une température excessive prédéterminée, ledit tube de dérivation (7) muni d'un thermostat étant placé entre les extrémités d'entrée et de sortie du tube spiral à carburant (4); un réchauffeur muni d'un thermostat (12) est agencé dans le tube (9) d'entrée du carburant du dispositif avant le point où ledit tube de dérivation (7) commence; un élément de compensation (14) qui a la forme d'un siphon est placé à la sortie du tube de dérivation (7) en empêchant la pompe de carburant de se vider, le carburant étant vaporisé totalement dans l'extrémité de sortie (6) du tube spiral à carburant (4).

2. Dispositif selon la revendication 1, caractérisé en ce que ledit réchauffeur est composé d'une section de tube (10) pour le passage du carburant, qui inclut un élément réchauffant (11) pour le préchauffage et vaporisation du carburant durant la période de fonctionnement initiel du moteur ou dispositif semblable, ainsi qu'un clapet de retenue (13) pour empêcher le carburant de retourner, ledit thermostat (12) déconnectant l'élément réchauffant (11) lorsque le carburant atteint une température appropriée.
